(19) Europäisches Patentamt
European Patent Office
Office européen des brevets

(11) EP 0 579 240 B1

(12) EUROPÄISCHE PATENTSCHRIFT

(45) Veröffentlichungstag und Bekanntmachung des Hinweises auf die Patenterteilung:
10.04.1996 Patentblatt 1996/15

(51) Int. Cl.$^6$: B60L 9/22, B60L 3/10

(21) Anmeldenummer: 93111421.9

(22) Anmeldetag: 16.07.1993

(54) **Verfahren und Vorrichtung zur Regelung des Mittenpotentials einer gleichstromseitigen Reihenschaltung von zwei Traktions-Zweipunktwechselrichtern**

Method and device for controlling the middle potential of a DC-side series connection of two two-point traction inverters

Méthode et dispositif pour réguler le potentiel milieu de la connection série, côté continu, de deux onduleurs de traction deux-points

(84) Benannte Vertragsstaaten:
BE DE ES FR IT

(30) Priorität: 17.07.1992 DE 4223605

(43) Veröffentlichungstag der Anmeldung:
19.01.1994 Patentblatt 1994/03

(73) Patentinhaber: ABB
PATENT GmbH
D-68309 Mannheim (DE)

(72) Erfinder:
• **Depenbrock, Manfred, Prof. Dr.-Ing.**
D-44797 Bochum (DE)

• **Wiesemann, Joachim**
D-45881 Gelsenkirchen (DE)

(74) Vertreter: **Rupprecht, Klaus, Dipl.-Ing. et al**
c/o ABB Patent GmbH,
Postfach 10 03 51
D-68128 Mannheim (DE)

(56) Entgegenhaltungen:
• **CONFERENCE RECORD OF THE 1991 IEEE INDUSTRY APPLICATIONS SOCIETY ANNUAL MEETING, Bd. 1, 1991, Seiten 291-297, XP28069; Hiroshi MIKI et al.: 'New AC Traction Drive System with Transistor VVVF Inverter'**

**Beschreibung**

Die Erfindung bezieht sich auf ein Verfahren bzw. eine Vorrichtung zur Regelung des Mittenpotentials einer gleichstromseitigen Reihenschaltung von zwei Traktions-Zweipunktwechselrichtern gemäß dem Oberbegriff der Ansprüche 1 bzw. 11.

Aus Conference Record of the 1991 IEEE Industry Applications Society Annual Meeting, Volume I, IEEE Catalog Number 91CH3077-5, 1991, Seiten 291 bis 297, XP 28069, Hiroshi Miki et al "New AC Traction Drive System with Transistor VVVF Inverter" sind ein Verfahren und eine Vorrichtung zur Ausgleichsregelung der Wechselrichter-Eingangsspannungen von gleichstromseitig in Reihe geschalteten Traktions-Zweipunktwechselrichtern zur Speisung von Antrieben eines Schienenfahrzeuges bekannt. Es werden Ausgleichsbedingungen aufgestellt, die die Wechselrichter-Eingangsspannungen in Beziehung zu den Verhältnissen zwischen Wechselrichter-Leistung und Wechselrichter-Eingangsspannungen setzen. Ein Ausgleichsregler verändert die Stromsollwerte in Abhängigkeit der aktuellen Wechselrichter-Eingangsspannung derart, daß die Ausgleichsbedingungen erfüllt werden.

Moderne Hochleistungs-GTOs (Gate-Turn-Off-Thyristoren), wie sie in Traktions-Wechselrichtern eingesetzt werden, weisen eine Spitzensperrspannung bis 4500 V auf. Damit können Wechselrichter, die über ein Netzfilter direkt an den Gleichspannungsfahrdraht angeschlossen werden, bis zu einer Netzspannung von 1500 V realisiert werden. Bei Bahnantrieben am Gleichspannungsfahrdraht mit einer Nennspannung bis 3000 V (Italien, Spanien) sowie bei Mehrsystemfahrzeugen, die im Gleichspannungsbetrieb aus Aufwandsgründen ohne Vorsteller betrieben werden sollen, müssen daher bei Verwendung der konventionellen Technik bei Zweipunktwechselrichtern jeweils zwei Ventile in Reihe geschaltet werden. Die Ausgangsleistung eines Zweipunktwechselrichters mit zwölf GTOs ist so hoch, daß aus wirtschaftlichen Gründen immer beide Antriebe eines Drehgestells in Parallelschaltung gespeist werden müssen.

Eine alternative Möglichkeit, die sich durch die benötigte Zahl von Ventilen bietet, ist die Reihenschaltung von zwei vollständigen Zweipunktwechselrichtern an einem Zwischenkreis, für die hauptsächlich Standardkomponenten verwendet werden können. Jeder Zweipunktwechselrichter speist nur einen Antrieb des Drehgestells, wobei sich ein gleicher Ventilaufwand im Vergleich zur konventionellen Technik ergibt.

Bei dieser Variante muß das Potential des Spannungsmittelpunktes beider Zweipunktwechselrichter jedoch stabilisiert werden, da die Einspeisung weiterhin nur an den äußeren Potentialpunkten erfolgt.

Der Erfindung liegt die Aufgabe zugrunde, ein Verfahren bzw. eine Vorrichtung zur Regelung des Mittenpotentials einer gleichstromseitigen Reihenschaltung von zwei Traktions-Zweipunktwechselrichtern der eingangs genannten Art anzugeben, das bzw. die eine optimale Stabilisierung des Potentials des Spannungsmittelpunktes beider Zweipunktwechelrichter sicherstellt.

Diese Aufgabe wird bezüglich des Verfahrens in Verbindung mit den Merkmalen des Oberbegriffes erfindungsgemäß durch die im Kennzeichen des Anspruchs 1 angegebenen Merkmale gelöst.

Die Aufgabe wird bezüglich der Vorrichtung durch die im Kennzeichen des Anspruchs 11 angegebenen Merkmale gelöst.

Die mit der Erfindung erzielbaren Vorteile bestehen insbesondere darin, daß durch die erfindungsgemäßen Maßnahmen eine individuelle Einzelachs-Momentenregelung mit Vorgabe getrennter Momentensollwerte für jede Achse des Drehgestells realisierbar ist, die die Möglichkeit bietet, die durch Zugkraftübertragung oberhalb der Schienenebene bewirkte Zusatzbe- und -entlastung der einzelnen Achsen bei den Momentensollwerten zu berücksichtigen. Dies ermöglicht auch ohne aufwendige mechanische Kompensationsmaßnahmen die physikalisch höchstmögliche Ausnutzung der Adhäsion und gewährleistet damit maximale Zugkraft.

Beide Antriebe können soweit wie möglich voneinander entkoppelt betrieben werden. Ohne mechanische Kompensation kann durch die Einzelachs-Momentenregelung eine größere Zugkraft übertragen werden, als bei der konventionellen Drehgestell-Momentenregelung. Es ist vorteilhaft keine Umschaltung der Regelstruktur beim Wechsel zwischen Beschleunigung und Bremsen notwendig. Ferner kann für die unterlagerte Momentenregelung der Antriebe das dafür am besten geeignete Verfahren (z. B. DSR) gewählt werden.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

Fig. 1    eine Zweipunktwechselrichter-Reihenschaltung zur Speisung der beiden Antriebe eines Drehgestells eines Schienenfahrzeuges,

Fig. 2    eine Regeleinrichtung für die Mittenpotentialregelung.

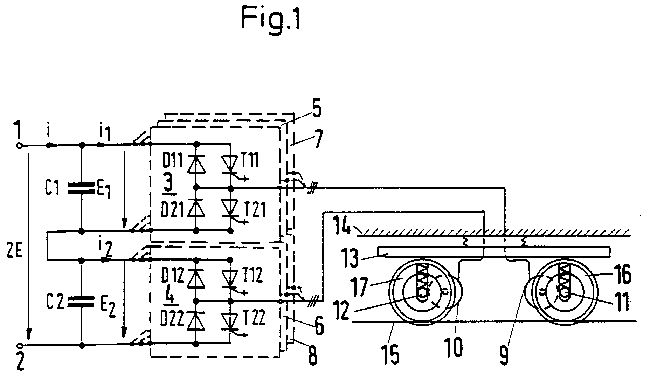

In Fig. 1 ist eine Zweipunktwechselrichter-Reihenschaltung zur Speisung der beiden Antriebe eines Drehgestells eines Schienenfahrzeuges dargestellt. Es ist eine Gleichspannungsquelle (Gleichspannungszwischenkreis) mit positivem Pol 1 und negativem Pol 2 zu erkennen, wobei zwischen beiden Polen 1, 2 zwei Kondensatoren C1, C2 in Reihe geschaltet sind. Parallel zum Kondensator C1 sind drei Zweipunktwechselrichterstränge 3, 5, 7 und parallel zum Kondensator C2 sind drei Zweipunktwechselrichterstränge 4, 6, 8 angeschlossen. Jeder der Zweipunktwechselrichterstränge ist in bekannter Weise aus zwei zünd- und löschbaren Stromrichterventilen - beispielsweise T11 und T21 des Wechselrichterstrangs 3 sowie T12 und T22 des Wechselrichterstrangs 4 - sowie aus zu diesen Ventilen jeweils parallelen Dioden - beispielsweise D11 und D21 des Wechselrichterstrangs 3 sowie D12 und D22 des Wechselrichterstrangs 4 - aufgebaut. Die notwendigen Ventilbeschaltungen sind nicht dargestellt.

Der gemeinsame Verbindungspunkt der Ventile T11, T21, D11, D21 des Wechselrichterstrangs 3 bildet einen Wechselspannungsanschluß, an den ein erster Antrieb 9 (Drehstrommaschine, Asynchronmaschine) angeschlossen ist. Weitere Anschlüsse dieses Antriebs 9 sind mit den Wechselspannungsanschlüssen der Wechselrichterstränge 5 und 7 verbunden, wobei an den Wechselspannungsanschlüssen der Wechselrichterstränge 3, 5, 7 ein Drehspannungssystem anliegt.

In gleicher Weise liegt der erste Anschluß eines zweiten Antriebes 10 am gemeinsamen Verbindungspunkt der Ventile T12, T22, D12, D22 des Wechselrichterstrangs 4. Weitere Anschlüsse dieses Antriebs 10 sind mit den Wechselspannungsanschlüssen der Wechselrichterstränge 6 und 8 verbunden, wobei an den Wechselspannungsanschlüssen der Wechselrichterstränge 4, 6, 8 ein Drehspannungssystem anliegt.

Die Antriebe 9 bzw. 10 sind einer ersten bzw. zweiten Achse 11 bzw. 12 zugeordnet, wobei diese Achsen jeweils über Federelemente an einem Drehgestell 13 eines Schienenfahrzeuges aufgehängt sind. Das Drehgestell 13 wiederum ist über Federelemente am Rahmen 14 des Schienenfahrzeuges aufgehängt. Das zur Führung der Räder 16 und 17 der Achsen 11 und 12 notwendige Gleis ist mit 15 bezeichnet.

Der über die Pole 1, 2 fließende Gleichstrom ist mit i, der Gleichstrom der Wechselrichterstränge 3, 5, 7 ist mit i1 und der Gleichstrom der Wechselrichterstränge 4, 6, 8 ist mit i2 bezeichnet. Die Gleichspannungen an den Traktions-Zweipunktwechselrichtersträngen 3, 5, 7 bzw. 4, 6, 8 betragen E1 bzw. E2 und die Gleichspannung zwischen den Polen 1, 2 ist mit 2E bezeichnet.

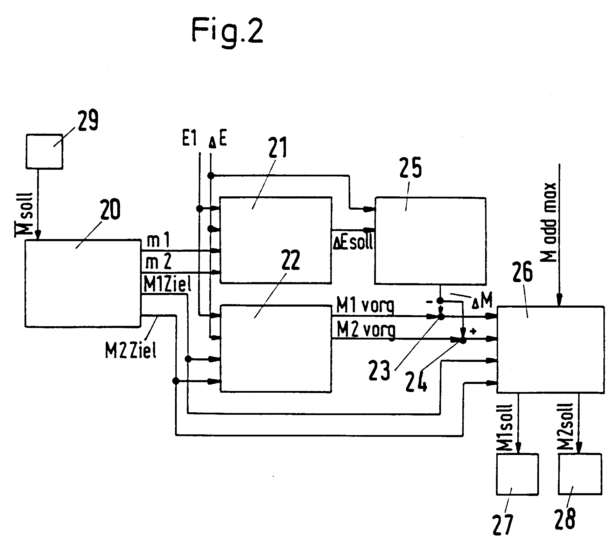

In Fig. 2 ist eine Regeleinrichtung für die Mittenpotentialregelung dargestellt. Es ist ein Kennliniengeber 20 zur Momentenaufteilung zu erkennen, der einen mittleren Drehgestell-Momentensollwert $\overline{M}_{soll}$ eingangsseitig empfängt und Zielmomente $M_{1ziel}$, $M_{2ziel}$ sowie einen Zielfaktor m1 abhängig von $M_{1ziel}$ und einen Zielfaktor m2 abhängig von $M_{2ziel}$ ausgangsseitig abgibt. Die beiden Zielfaktoren m1, m2 werden einem Rechner 21 für Mittenpotential-Sollwerte zugeleitet. Dieser Rechner 21 empfängt eingangsseitig ferner ein Signal entsprechend der Gleichspannung E1 und einen Mittenpotential-Istwert $\Delta E$ und gibt ausgangsseitig einen Mittenpotential-Sollwert $\Delta E_{soll}$ an einen Mittenpotentialregler 25 ab.

Die Zielmomente $M_{1Ziel}$, $M_{2Ziel}$ werden einem Rechner 22 für potentialneutrale Vorgabewerte und einem Begrenzer 26 zur Momentenbegrenzung zugeführt. Der Rechner 22 empfängt eingangsseitig ferner ein Signal entsprechend der Gleichspannung E1 und den Mittenpotential-Istwert $\Delta E$ und gibt ausgangsseitig potentialneutrale Vorgabewerte $M_{1vorg}$ bzw. $M_{2vorg}$ an Addierer 23 bzw. 24 ab.

Der Mittenpotentialregler 25 empfängt neben $\Delta E_{soll}$ als weitere Eingangsgröße den Mittenpotential-Istwert $\Delta E$ und gibt ausgangsseitig ein Zusatzmoment $\Delta M$ an die beiden Addierer 23, 24 ab. Dieses Zusatzmoment $\Delta M$ wird den Addierern mit jeweils unterschiedlichem Vorzeichen aufgeschaltet. Die von den Addierern 23, 24 gebildeten Signale $M_{1vorg} - \Delta M$ und $M_{2vorg} + \Delta M$ werden dem Begrenzer 26 neben $M_{1ziel}$, $M_{2ziel}$ als weitere Eingangsgrößen zugeleitet. Ausgangsseitig gibt der Begrenzer 26 individuelle Achsen-Momentensollwerte $M_{1soll}$, $M_{2soll}$ für die unterlagerten Momentenregler 27, 28 der beiden Drehgestellantriebe 9, 10 vor.

In Fig. 2 ist angedeutet, daß der mittlere Drehgestell-Momentensollwert $\overline{M}_{soll}$ von einem überlagerten Schlupfregler 29 abgegeben werden kann.

Nachfolgend wird die prinzipielle Funktionsweise der Regeleinrichtung beschrieben. Ziel der Regeleinrichtung sowie des ihr zugrundeliegenden Regelverfahrens ist es, die beiden Antriebe 9, 10 soweit wie möglich entkoppelt voneinander betreiben zu können. Jeder Antrieb hat seinen eigenen autonomen, unterlagerten Momentenregler 27, 28. Die Stabilisierung des Mittenpotentials wird vom überlagerten Mittenpotentialregler 25 vorgenommen. Dieser wirkt auf die Sollwerte der unterlagerten Momentenregler der beiden Antriebe. Dadurch kann auch bei der Reihenschaltung von zwei wechselrichtergespeisten Antrieben für die unterlagerte Momentenregelung der Antriebe das dafür bestgeeignete Verfahren gewählt werden, ohne daß dieses Einfluß auf die Struktur des überlagerten Reglers besitzt.

Die Teilzwischenkreisspannungen, d. h. die Gleichspannungen E1, E2 müssen sich im stationären Fall wie die von den Antrieben aufgenommenen Wirkleistungen verhalten. Damit dieser Zustand im Fahrbetrieb stabil ist, muß er aktiv geregelt werden.

Bei einer Veränderung der Sollmomente muß der überlagerte Regler vorrangig das Mittenpotential so einstellen, daß für die neuen Zielwerte der Momente möglichst schnell wieder ein stabiler stationärer Zustand erreicht wird. Dazu müssen aus den Zielmomenten und der aktuellen Drehzahl die bei Erreichen dieser Zielmomente von den Antrieben aufgenommen Wirkleistungen berechnet werden. Aus diesen kann mit den Gleichungen für den stationären Zustand der Mittenpotential-Sollwert $\Delta Esoll$ errechnet werden.

Als Eingriffspunkte für den Mittenpotentialregler 25 bieten sich prinzipiell zwei Möglichkeiten an: Die Flußsollwerte und/oder die Momentensollwerte der unterlagerten Regler 27, 28 für die Flüsse und/oder Drehmomente.

Eine Regelung des Mittenpotentials durch die Momentensollwerte beeinflußt während der Momentendynamik zwar die auf die Schiene übertragene Zugkraft, bietet dafür aber die Möglichkeit, den stationären Zustand schnell zu erreichen.

Als Stellgrößen stehen hierbei jeweils die mechanische Leistung, sowie ein Teil der Verlustleistung zur Verfügung. Für die Verschiebung des Mittenpotentials ist aber letztlich nur die Differenz der Gleichströme i1, i2 beider Zweipunktwechselrichter wirksam.

Der Flußbetrag beeinflußt die Höhe der Verluste der Maschine und - in geringem Maß - des Wechselrichters. Solange der Fluß nicht zu niedrig wird, hat eine Verstellung keinerlei Wirkung auf die geregelten Momente. Bei Nenndrehzahl betragen die Verluste aber nur ca. 5% der gesamten Wirkleistung. Auch lassen sich die Verluste nur in einem kleinen Bereich - noch dazu stark nichtlinear - durch den Flußbetrag verstellen. Die Verstellung des Mittenpotentials allein durch Verstellung der Verluste verläuft also entsprechend langsam.

Zur optimalen Regelung des Mittenpotentials wird die in Figur 2 gezeigte Regelungs-Struktur verwendet, die den Drehgestell-Momentensollwert $\overline{M}_{soll}$ auf zwei Achsen-Momentensollwerte $M_{1soll}$, $M_{2soll}$ aufteilt und dadurch indirekt das Mittenpotential regelt.

Die Momentenaufteilung erfolgt stationär entsprechend den mechanischen Anforderungen hinsichtlich Achsbe- und -entlastung auf die Zielmomente $M_{1ziel}$, $M_{2ziel}$ bzw. Zielfaktoren m1, m2 für das Verhältnis der Momente. Die aktuellen Vorgabewerte $M_{1vorg}$, $M_{2vorg}$ werden entsprechend der Zielmomente und der momentanen Spannungsaufteilung (Gleichspannungen E1, E2) so berechnet, daß sich aus diesen Momenten keine Verschiebung des Mittenpotentials ergibt (potentialneutraler Vorgabewert). Zu diesen potentialneutralen, aktuellen Vorgabewerten $M_{1vorg}$, $M_{2vorg}$ wird das Zusatzmoment $\Delta M$ aufgeschaltet, um das Mittenpotential in die gewünschte Richtung zu bewegen. Sobald der Sollwert für das Mittenpotential $\Delta Esoll$ erreicht ist, werden die Zusatzmomente $\Delta M$ zu Null und der potentialneutrale Vorgabewert $M_{1vorg}$, $M_{2vorg}$ entspricht den Zielmomenten $M_{1ziel}$, $M_{2ziel}$. Damit der überlagerte Schleuder-/Gleitschutz oder Schlupfregler 29 immer seine Funktion erfüllen kann, sollte in weiten Betriebsbereichen ein Achsen-Momentensollwert $M_{1soll}$, $M_{2soll}$ nicht größer als sein Zielwert entsprechend $M_{1ziel}$, $M_{2ziel}$ sein. Eine Regelung des Mittenpotentials kann daher nur durch Absenken eines Momentenbetrages gegenüber dem Betrag des entsprechenden Zielmomentes geschehen. Daraus folgt, daß für die Zeit der Mittenpotialverstellung nicht das geforderte Summenmoment entsprechend $\overline{M}_{soll}$ geliefert werden kann. Dies führt zu der Forderung, die für die Nachführung des Mittenpotentials benötigte Zeit so klein wie möglich zu halten.

Nach der vorstehenden prinzipiellen Darlegung der Funktionsweise der Regelung werden nachfolgend die Funktionsweisen der Regelkomponenten im einzelnen erläutert.

Bei der Momentenaufteilung mittels des Kennliniengebers 20 in Zielmomente $M_{1ziel}$, $M_{2ziel}$ wird berücksichtigt, daß bei der Übertragung von Zugkräften auf die Schiene die einzelnen Achsen 11, 12 eines Drehgestells 13 zusätzlich zur Gewichtslast be- bzw. entlastet werden. Die jeweils in Fahrtrichtung vordere Achse wird bei Zugkraft entlastet, die hintere belastet. Diese Last macht sich durch eine zusätzliche Auflagekraft des Rades auf die Schiene bemerkbar. Diese zusätzliche Auflagekraft ist proportional zum aufgebrachten Moment; der Proportionalitätsfaktor ergibt sich aus der Drehgestellgeometrie. Da das von einer Achse übertragbare Drehmoment proportional zur Auflagekraft ist, kann eine belastete Achse ein entsprechend höheres Moment übertragen, eine entlastete Achse ein entsprechend niedrigeres. Aus diesem Zusammenhang ergibt sich für das zusätzlich übertragbare Moment in Abängigkeit vom Gesamtmoment ein quadratischer Verlauf.

Ohne aufwendige mechanische Kompensation kann durch Einzelachs-Momentenregelung eine größere Zugkraft übertragen werden, als bei der üblichen Drehgestell-Momentenregelung, bei der beiden Achsen des Drehgestells der gleiche Drehmoment-Sollwert zugrunde liegt.

Um eine stabile, von den über- und unterlagerten Reglern weitgehend entkoppelte Mittenpotentialregelung zu erreichen, wird erfindungsgemäß als Vorgabe für die Momenten-Sollwerte der einzelnen Achsen zunächst ein (Mittenpotential-)neutraler Vorgabewert $M_{1vorg}$, $M_{2vorg}$ gebildet. Auf diesen wird dann das jeweilige Zusatzmoment $\Delta M$, das die gewünschte Mittenpotentialverschiebung bewirken soll, aufgeschaltet.

Würde als Sollwert sofort das jeweilige Zielmoment $M_{1ziel}$, $M_{2ziel}$ plus bzw. minus dem vom Mittenpotentialregler 25 gebildeten Zusatzmoment $\Delta M$ verwendet werden, so dürfte die Verstärkung des Mittenpotentialreglers einen Mindestwert nicht unterschreiten: Wird der mittlere Drehgestell-Momentensollwert $\overline{M}_{soll}$ geändert (z. B. durch den Schlupfregler 29), so ändert sich auch die Aufteilung der Momente auf die Achsen. Dadurch ergibt sich eine Leistungsverteilung, die das Mittenpotential verschiebt (bei Fahrbetrieb in nachteiliger Weise in die dem gewünschten Zielzustand entgegengesetzte Richtung). Um die Verschiebung des Mittenpotentials auszugleichen, müßte der Mittenpotentialregler 25 wenigstens ein bestimmtes minimales Zusatzmoment $\Delta M$ aufschalten, das wiederum eine bestimmte Mindestverstärkung des Mittenpotentialreglers bedingt. Diese kann in einigen Betriebsbereichen mit anderen Anforderungen an die Verstärkung des Mittenpotentialreglers (z. B. Stabilität) kollidieren.

Daher werden die Vorgabewerte $M_{1vorg}$, $M_{2vorg}$ für die Momentensollwerte aus den Zielmomenten $M_{1ziel}$, $M_{2ziel}$ und der aktuellen Spannungsaufteilung entsprechend $\overline{E}1$, $\Delta E$ so berechnet, daß sie keine Verschiebung des Mittenpotentials bewirken. Außerdem soll das mit den beiden Vorgabewerten $M_{1vorg}$, $M_{2vorg}$ erreichbare Moment so nahe wie möglich am mittleren Drehgestell-Momentensollwert $\overline{M}_{soll}$ liegen, ohne daß einer der beiden Vorgabewerte $M_{1vorg}$, $M_{2vorg}$ das Zielmoment $M_{1ziel}$, $M_{2ziel}$ übersteigt. Dies wird am besten dadurch erreicht, daß der eine Vorgabewert dem Zielmoment entspricht und der andere Vorgabewert aus diesem und der aktuellen Spannungsverteilung entsprechend E1, $\Delta E$

berechnet wird. Die Entscheidung, welches Zielmoment als Vorgabewert verwendet werden kann, hängt vom Vorzeichen des mittleren Drehgestell-Momentensollwerts und der Drehrichtung (Fahrtrichtung des Schienenfahrzeuges) ab.

Aus den Zielfaktoren m1, m2 für das Verhältnis der beiden Achsenmomente und aus der aktuellen Gesamtspannung entsprechend E1, $\Delta$E läßt sich ein Wert für das Mittenpotential errechnen, bei dem dieses stationär stabil ist.

Aus den Zielfaktoren m1, m2 für das Verhältnis der beiden Achsenmomente und aus der Drehzahl, sowie den Flußsollwerten werden die Wirkleistungen der beiden Antriebe berechnet. Damit das Mittenpotential stabil ist, müssen die Gleichströme i1, i2 der beiden Antriebe gleich sein. Dies ist der Fall, wenn die beiden Gleichspannungen der Zweipunktwechselrichter zueinander im gleichen Verhältnis stehen, wie die beiden Wirkleistungen.

Um das Mittenpotential in eine Richtung zu bewegen, kann der Momentensollwert der einen Achse erhöht und/oder der Momentensollwert der anderen Achse verringert werden. Daher benötigt man für die Regelung des Mittenpotentials nur eine Stellgröße - das Zusatzmoment $\Delta$M - die bei den beiden Momentensollwerten respektive Vorgabewerten $M_{1vorg}$, $M_{2vorg}$ mit entgegengesetztem Vorzeichen berücksichtigt wird. Zur Bildung des Zusatzmoments $\Delta$M liegen dem Mittenpotentialregler Istwert $\Delta$E und Sollwert $\Delta E_{soll}$ an. Als Mittenpotentialregler 25 bietet sich im einfachsten Fall ein P-Regler mit Begrenzung an, da die Regelstrecke bereits integrales Verhalten zeigt. Der so erhaltene zusätzliche Momentensollwert $\Delta$M kann dann zum potentialneutralen Vorgabewert, z. B. $M_{2vorg}$ der einen Achse addiert und vom potentialneutralen Vorgabewert, z. B. $M_{1vorg}$ der anderen Achse subtrahiert werden, um so die Sollwerte für die beiden Achsen zu erhalten.

Im stationären Betrieb ist der potentialneutrale Vorgabewert $M_{1vorg}$, $M_{2vorg}$ für beide Achsen gleich dem Zielwert $M_{1ziel}$, $M_{2ziel}$ für die jeweilige Achse. Da stationär der Mittenpotential-Istwert $\Delta$E gleich dem Sollwert $\Delta E_{soll}$ ist, wird kein zusätzlicher Regel-Sollwert in Form des Zusatzmoments $\Delta$M aufgeschaltet. Stationär werden also exakt die Momente realisiert, die die Momentenaufteilung fordert.

Beim Beschleunigen ist das Mittenpotential ohne Regelung labil, d.h. eine geringe Änderung des Mittenpotentials bewirkt einen Mittelpunktstrom, der das Mittenpotential weiter vom stabilen Punkt entfernt (Mitkopplung). Es muß daher aktiv geregelt werden.

Beim Bremsen ist das Mittenpotential an sich stabil, d. h. eine geringe Änderung des Mittenpotentials bewirkt einen Mittelpunktstrom, der seiner Ursache entgegenwirkt (Gegenkopplung). Es wäre demzufolge keine Regelung erforderlich. Da eine Vorzeichenumkehr des Drehmomentes $\overline{M}$soll relativ häufig auftritt, insbesondere bei Momenten nahe Null, ist es jedoch vorteilhaft, auch in diesem Bereich zu regeln.

Bei Änderungen von $\overline{M}_{soll}$ muß zuerst das für den stationären Betrieb mit den geforderten Momenten erforderliche Mittenpotential erreicht werden, bevor die Momentensollwerte ohne zusätzliche Aufschaltung eines Mittenpotential-Stellsignals an die Antriebe übergeben werden können. Auf Grund der betragsmäßigen Begrenzung der Vorgabewerte $M_{1vorg}$, $M_{2vorg}$ auf die Zielmomente ist das Summenmoment $M_{1soll} + M_{2soll}$ der beiden Achsen für die Dauer der Mittenpotentialverschiebung zu jedem Zeitpunkt betragsmäßig niedriger als der Drehgestell-Sollwert $M_{soll}$.

Diese Regelstrategie bringt zwar im Bremsbereich während der Mittenpotentialverschiebung betragsmäßig Einbußen beim Summenmoment gegenüber dem ungeregelten Betrieb, hat aber den Vorteil, daß keine Umschaltung der Regelungsstruktur beim Wechsel zwischen Beschleunigung und Bremsen nötig ist.

Durch die Drehrichtungsumkehr von Vorwärts- auf Rückwärtsbetrieb ändert sich auch das Vorzeichen der Wirkleistung bei gleichem Moment, d. h. es kommt zu einer Umkehr des Regelsinns. Dadurch ist auch ein Vorzeichenwechsel der Verstärkung des Mittenpotentialreglers 25 erforderlich. Da kein Springen des Momentensollwerts erlaubt ist, darf ein derartiger Vorzeichenwechsel nicht schlagartig erfolgen. Daher muß die Verstärkung des Mittenpotentialreglers 25 bereits bei kleinen Drehzahlen verringert werden. Es bietet sich an, die P-Verstärkung des Mittenpotentialreglers 25 abhängig von der Drehzahl auf einer Rampe durch den Nullpunkt zu fahren. Dies auch deshalb, weil bei kleinen Drehzahlen die Regelstrecke stark nichtlinear wird.

Bei Drehzahl Null stehen als Stellgröße nur noch die Verlustleistungen der beiden Antriebe zur Verfügung. Diese sind nur vom Betrag der beiden Momente abhängig. Da sich somit bei einem Vorzeichenwechsel des Momentes der Regelsinn umkehren würde, kann in diesem Bereich das Mittenpotential nicht mit einem P-Regler geregelt werden. Ähnliches gilt für sehr kleine Momente, bei denen die Verlustleistung gegenüber der mechanischen Leistung überwiegt.

Da die Verlustleistungen klein sind gegenüber der Nennleistung der Antriebe, können in diesem Bereich (Drehzahl nahe Null) die bei Gleichspannungsschienenfahrzeugen stets vorhandenen Bremschopper zur 2-Punkt-Regelung des Mittenpotentials herangezogen werden. Die Bremschopper sind für die Nennleistung der Antriebe ausgelegt. Bei der Regelung des Mittenpotentials muß von einem Bremschopper maximal die Verlustleistung eines Antriebes ausgeglichen werden und dies auch nur für die Dauer der Momentendynamik.

Wesentlich für die Stabilität der Mittenpotentialregelung sind deren Verstärkung sowie das Verhalten der unterlagerten Drehmomentregler 27, 28.

Unter Vernachlässigung aller Verluste ist die Wirkleistung der beiden Antriebe gleich der mechanischen Leistung. Da der potentialneutrale Vorgabewert $M_{1vorg}$, $M_{2vorg}$ für die beiden Achsmomente keinen Mittelpunktstrom ergibt, läßt sich der Mittelpunktstrom direkt aus dem Zusatzmoment $\Delta$M des Mittenpotentialreglers 25 berechnen. Es ergibt sich, daß der Mittelpunktstrom proportional zum Zusatzmoment $\Delta$M und proportional zur Drehzahl ist. Da die Gesamtverstärkung proportional der Drehzahl ist, muß, um gleichbleibende Phasenreserve (= Stabilität) im gesamten Drehzahlbereich zu erhalten, die P-Verstärkung des Mittenpotentialreglers 25 umgekehrt zur Drehzahl abgesenkt werden.

Da bei Drehzahlen um Null keine Regelung des Mittenpotentials durch den Mittenpotentialregler 25 erfolgen darf, wird in diesem Bereich die P-Verstärkung zu Null gewählt.

Ab der Übernahme-Drehzahl des Reglers wird mit einer Rampe auf die dann zulässige P-Verstärkung übergegangen.

Für die Regelung des Mittenpotentials bei Drehzahlen um Null wird der Bremschopper eingesetzt. Er wird im Bereich um Drehzahl Null als Stellglied eines Zweipunkt-Reglers verwendet. Ab der Übernahmedrehzahl des P-Reglers (Mittenpotentialreglers) wird dann die Hysterese-Bandbreite des Zweipunktreglers erhöht, damit dieser durch den P-Regler (Mittenpotentialregler) abgelöst werden kann. Bei höheren Drehzahlen wird sie dann soweit vergrößert, daß der Zweipunktregler nur noch Schutzaufgaben wahrnimmt.

Damit der überlagerte Schleuder-/Gleitschutz oder ein Schlupfregler 29 ständig im Eingriff ist, darf in weiten Betriebsbereichen der Momentensollwert $M_{1soll}$, $M_{2soll}$ einer Achse nicht betragsmäßig größer als der Zielfaktor M1ziel, M2ziel dieser Achse sein.

Bei der Berechnung des potentialneutralen Vorgabewertes $M_{1vorg}$, $M_{2vorg}$ wird diese Bedingung von vornherein berücksichtigt. Das aufzuschaltende Zusatzmoment $\Delta M$ für die Regelung des Mittenpotentials wird zum Vorgabewert $M_{1vorg}$ oder $M_{2vorg}$ der einen Achse addiert, bei der anderen Achse aber vom Vorgabewert subtrahiert. Dadurch wird eine anschließende betragsmäßige Begrenzung der Momentenwollwerte $M_{1soll}$, $M_{2soll}$ auf das jeweilige Zielmoment $M_{1ziel}$, $M_{2ziel}$ nötig.

Die Momentensollwerte werden zu betragsmäßig größeren Werten hin auf das jeweilige Zielmoment $M_{1ziel}$, $M_{2ziel}$ begrenzt. Damit auch bei Begrenzung eine konstante Kreisverstärkung des Mittenpotentialreglers 25 gewährleistet ist, wird die beim Sollwert der einen Achse vorhandene Differenz zwischen begrenztem und nicht begrenztem Sollwert vom Sollwert der anderen Achse subtrahiert. Dies führt dazu, daß während der Mittenpotentialverschiebung das Summenmoment $M_{1soll} + M_{2soll}$ der beiden Achsen immer geringer als der Drehgestell-Sollwert $\overline{M}_{soll}$ ist.

Zweckmäßig begrenzt der Begrenzer 26 die mit dem Zusatzmment $\Delta M$ beaufschlagten potentialneutralen Vorgabewerte $M_{1vorg}$, $M_{2vorg}$ zu größeren Beträgen hin so auf die Zielmomente $M_{1ziel}$, $M_{2ziel}$, daß die Summe der Zusatzmomente weiterhin $2\Delta M$ beträgt, d.h.

$$(M_{2vorg} - M_{1vorg}) - (M_{2ziel} - M_{1ziel}) = 2\Delta M.$$

In Betriebsbereichen mit kleinen Momenten ist auch bei Aufschaltung von betragsvergrößernden Regelmomenten - d.h. Zusatzmomenten $\Delta M$ - keine Gefahr des Schleuderns/Gleitens gegeben. Daher kann in diesen Betriebsbereichen mit kleinen Momenten auf eine Begrenzung der Momentensollwerte $M_{1soll}$, $M_{2soll}$ auf die Zielwerte $M_{1ziel}$, $M_{2ziel}$ verzichtet werden. Dadurch ist während der Mittenpotentialverschiebung in diesen Betriebsbereichen das Summenmoment $M_{1soll} + M_{2soll}$ immer gleich dem Drehgestell-Sollwert $\overline{M}_{soll}$.

Unterschreiten die Zielmomente $M_{1ziel}$, $M_{2ziel}$ betragsmäßig einen Schwellwert $M_{add\ max}$, wird die Begrenzung nur noch auf diesen Schwellwert durchgeführt, so daß dann auch betragsmäßig größere Achsen-Momentensollwerte $M_{1soll}$, $M_{2soll}$ als die jeweiligen Zielmomente $M_{1ziel}$, $M_{2ziel}$ möglich sind.

Als überlagerter Regler für die vorstehend aufgezeigte Regelstruktur ist ein Schlupfregler 29 oder ein Schleuderschutz möglich. Dieser hat als Eingriffgröße nur den mittleren Momentensollwert $\overline{M}_{soll}$ für das Drehgestell 13 und nicht beide Achsen-Momentensollwerte $M_{1soll}$, $M_{2soll}$ zur Verfügung. Das hat aber keinen Nachteil zur Folge.

Bei einer Auslegung des Schleuderschutzes für einzelne Achsen würde beim Schleudern einer Achse der zugehörige Momentensollwert $M_{1soll}$ oder $M_{2soll}$ zurückgenommen. Daraufhin würde der Mittenpotentialregler 25 eingreifen, um das Mittenpotential der geänderten Momentenverteilung anzupassen. Da der Mittenpotentialregler 25 keinen Momentensollwert erhöhen darf, würde er automatisch den Momentensollwert der anderen Achse im Drehgestell verringern. Das heißt, ein Eingreifen des Schleuderschutzes führt bei Reihenschaltung der Wechselrichter immer zu einer Verringerung des Drehmomentes beider Achsen. Deshalb kann man den Schleuderschutz ohne Nachteile auch nur auf den Summensollwert $\overline{M}_{soll}$ einwirken lassen.

Von der Annahme ausgehend, daß an beiden Achsen gleiche Reibungswerte vorhanden sind (der "Putzeffekt" der vorlaufenden Achse wird vernachlässigt) und die vorgenommene Momentenaufteilung der Fahrzeuggeometrie exakt entspricht, tritt Schleudern immer an beiden Achsen des Drehgestells gleichzeitig auf. Selbst bei geringen Unterschieden in den Reibwerten an beiden Achsen und bei fehlerhafteter Nachbildung der Achsentlastungen durch den Kennlinengeber 20 liegen die beiden Schleudergrenzen nur sehr wenig auseinander, so daß ein Einzelachs-Schleuderschutz bei beiden Achsen des Drehgestells fast gleichzeitig eingreifen würde. Auch von daher bringt der Eingriff des Schleuderschutzes auf nur den Drehgestell-Momentensollwert $\overline{M}_{soll}$ keine zusätzlichen Nachteile.

## Patentansprüche

1. Verfahren zur Regelung des Mittenpotentials einer gleichstromseitigen Reihenschaltung von zwei Traktions-Zweipunktwechselrichtern zur Speisung von zwei Antrieben eines Drehgestells eines Schienenfahrzeuges, dadurch gekennzeichnet, daß der Drehgestell-Momentensollwert ($\overline{M}_{soll}$) in zwei Achsen-Momentensollwerte ($M_{1soll}$, $M_{2soll}$)

für autonome, unterlagerte Momentenregler (27, 28) für jeden Antrieb (9, 10) aufgeteilt wird, wobei die beiden Achsen-Momentensollwerte derartig gebildet werden, daß das Verhältnis der Gleichspannungen (E1, E2) beider Zweipunktwechselrichter (3 bis 8) stationär dem Verhältnis der Wirkleistungen der Antriebe enspricht.

2.  Verfahren nach Anspruch 1, dadurch gekennzeichnet, daß die Aufteilung der Achsen-Momentensollwerte entsprechend der mechanischen Achsbe- und -entlastung und gemäß der Drehgestellgeometrie erfolgt und hieraus entsprechende Zielmomente ($M_{1ziel}$, $M_{2ziel}$) bzw. Zielfaktoren (m1, m2) abgeleitet werden.

3.  Verfahren nach Anspruch 2, dadurch gekennzeichnet, daß entsprechend den Zielmomenten ($M_{1ziel}$, $M_{2ziel}$) und den aktuellen Gleichspannungen (E1, E2) an den Zweipunkt-Wechselrichtern (3 bis 8) aktuelle potentialneutrale Vorgabewerte ($M_{1vorg}$, $M_{2vorg}$) für die Achsenmomente derart gebildet werden, daß sich aus diesen Vorgabewerten ($M_{1vorg}$, $M_{2vorg}$) keine Verschiebung des Mittenpotentials ergibt.

4.  Verfahren nach Anspruch 3, dadurch gekennzeichnet, daß die potentialneutralen Vorgabewerte ($M_{1vorg}$, $M_{2vorg}$) mit einem Zusatzmoment ($\Delta M$) derart gegensinnig beaufschlagt werden, daß sich die gewünschte Mittenpotentialverschiebung entsprechend der Wirkleistung der Antriebe (9, 10) ergibt, wobei das Zusatzmoment ($\Delta M$) zum einen potentialneutralen Vorgabewert addiert und vom anderen potentialneutralen Vorgabewert subtrahiert wird.

5.  Verfahren nach Anspruch 4, dadurch gekennzeichnet, daß das Zusatzmoment ($\Delta M$) in Abhängigkeit des Mittenpotential-Istwertes ($\Delta M$) und des in Abhängigkeit von den Gleichspannungen (E1, E2) an den Zweipunktwechselrichtern und den Wirkleistungen der Antriebe (9, 10) gebildeten Mittenpotential-Sollwertes ($\Delta Esoll$) geregelt vorgegeben wird.

6.  Verfahren nach Anspruch 5, dadurch gekennzeichnet, daß die Achsen-Momentensollwerte ($M_{1soll}$, $M_{2soll}$) auf die Zielmomente ($M_{1ziel}$, $M_{2ziel}$) betragsmäßig begrenzt werden.

7.  Verfahren nach Anspruch 3, dadurch gekennzeichnet, daß ein potentialneutraler Vorgabewert für das Achsmoment entsprechend dem Zielmoment gewählt wird, während der andere potentialneutrale Vorgabewert entsprechend dem bereits festgelegten Vorgabewert und den akutellen Gleichspannungen (E1, E2) an den Zweipunktwechselrichtern (3 bis 8) gebildet wird.

8.  Verfahren nach einem der Ansprüche 2 bis 7, dadurch gekennzeichnet, daß die stationären Wirkleistungen der Antriebe (9, 10) aus den Zielmomenten ($M_{1ziel}$, $M_{2ziel}$), der Drehzahl der Antriebe und den von den Flußsollwerten der Antriebe abhängigen Verlusten bestimmt werden.

9.  Verfahren nach Anspruch 5, dadurch gekennzeichnet, daß die Bildung des Zusatzmomentes ($\Delta M$) in Abhängigkeit der Drehzahl mit P-Verstärkung erfolgt, wobei die P-Verstärkung im Bereich zwischen einer positiven und einer negativen Übernahmedrehzahl den Wert Null aufweist und mit steigender positiver bzw. negativer Drehzahl rampenförmig ansteigt.

10. Verfahren nach Anspruch 9, dadurch gekennzeichnet, daß für die Regelung des Mittenpotentials bei Drehzahlen um Null ein Bremschopper eingesetzt wird.

11. Vorrichtung zur Durchführung des Verfahrens nach einem der Ansprüche 1 bis 10 und zur Regelung des Mittenpotentials einer gleichstromseitigen Reihenschaltung von zwei Traktions-Zweipunktwechselrichtern zur Speisung von zwei Antrieben eines Drehgestells eines Schienenfahrzeuges, dadurch gekennzeichnet, daß ein Kennliniengeber (20) vorgesehen ist, der aus dem Drehgestell-Momentensollwert ($\overline{M}_{soll}$) zwei Zielmomente ($M_{1ziel}$, $M_{2ziel}$) bzw. Zielfaktoren (m1, m2) entsprechend der mechanischen Achsbe- und -entlastung und der Drehgestellgeometrie bildet, daß ein erster Rechner (21) aus den Zielfaktoren, den Gleichspannungen (E1, E2) an den Zweipunktwechselrichtern (3 bis 8) und den Wirkleistungen der Antriebe (9, 10) einen Mittenpotential-Sollwert ($\Delta E_{soll}$) bildet, daß ein zweiter Rechner (22) aus den Zielmomenten und den Gleichspannungen an den Zweipunktwechselrichtern potentialneutrale Vorgabewerte ($M_{1vorg}$, $M_{2vorg}$) für die Achsmomente bildet, daß ein Mittenpotentialregler (25) entsprechend dem Mittenpotential-Sollwert/Istwert-Vergleich ($\Delta Esoll, \Delta E$) ein Zusatzmoment ($\Delta M$) bildet, und daß ein potentialneutraler Vorgabewert mit dem Zusatzmoment positiv und der andere Vorgabewert negativ beaufschlagt werden.

12. Vorrichtung nach Anspruch 11, dadurch gekennzeichnet, daß ein Begrenzer (26) die mit dem Zusatzmoment ($\Delta M$) beaufschlagten potentialneutralen Vorgabewerte ($M_{1vorg}$, $M_{2vorg}$) auf die Zielmomente ($M_{1ziel}$, $M_{2ziel}$) betragsmäßig begrenzt.

**13.** Vorrichtung nach Anspruch 12, dadurch gekennzeichnet, daß der Begrenzer (26) die mit dem Zusatzmoment ($\Delta$M) beaufschlagten potentialneutralen Vorgabewerte ($M_{1vorg}$, $M_{2vorg}$) zu größeren Beträgen hin derart auf die Zielmomente ($M_{1ziel}$, $M_{2ziel}$) begrenzt, daß die Differenz zwischen der Differenz der potentialneutralen Vorgabewerte ($M_{2vorg}$ - $M_{1vorg}$) und der Differenz der Zielmomente ($M_{2ziel}$ - $M_{1ziel}$) stets dem Wert des doppelten Zusatzmomentes ($2\Delta$M) entspricht.

**14.** Vorrichtung nach Anspruch 12 und/oder 13, dadurch gekennzeichnet, daß der Begrenzer (26) die mit dem Zusatzmoment ($\Delta$M) beaufschlagten potentialneutralen Vorgabewerte ($M_{1vorg}$, $M_{2vorg}$) auf einen Schwellwert ($M_{add\,max}$) begrenzt, wenn die Zielmomente ($M_{1ziel}$, $M_{2ziel}$) betragsmäßig kleiner als dieser Schwellwert sind.

## Claims

**1.** Method for regulating the mid-potential of a series circuit on the DC-side of two traction two-point invertors for supplying two drives of a bogey of a railway vehicle, <u>characterized</u> in that the required bogey torque ($\overline{M}_{req}$) is split into two required axle torques ($M_{1req}$, $M_{2req}$) for autonomous, lower-level torque regulators (27, 28) for each drive (9, 10), the two required axle torques being formed in such a manner that the ratio of the DC voltages (E1, E2) of the two two-point invertors (3 to 8) corresponds in the steady state to the ratio of the real powers of the drives.

**2.** Method according to Claim 1, characterized in that the required axle torques are split in accordance with the mechanical axle load and load relief and in accordance with the bogey geometry and corresponding desired torques ($M_{1des}$, $M_{2des}$) and desired factors (m1, m2) are derived from this.

**3.** Method according to Claim 2, characterized in that current neutral-potential preset values ($M_{1preset}$, $M_{2preset}$) for the axle torques are formed corresponding to the desired torques ($M_{1des}$, $M_{2des}$) and the current DC voltages (E1, E2) at the two-point invertors (3 to 8) in such a manner that no shift in the mid-potential results from these preset values ($M_{1preset}$, $M_{2preset}$).

**4.** Method according to Claim 3, characterized in that the neutral-potential preset values ($M_{1preset}$, $M_{2preset}$) have an additional torque ($\Delta$M) applied to them in the opposite sense in such a manner that the desired mid-potential shift corresponding to the real power of the drives (9, 10) is produced, the additional torque ($\Delta$M) being added to one neutral-potential preset value and being subtracted from the other neutral-potential preset value.

**5.** Method according to Claim 4, characterized in that the additional torque ($\Delta$M) is preset as a function of the actual mid-potential value ($\Delta$M) and of the required mid-potential value ($\Delta$Ereq) which is formed as a function of the DC voltages (E1, E2) at the two-point invertors and of the real powers of the drives (9, 10).

**6.** Method according to Claim 5, characterized in that the required axle torques ($M_{1req}$, $M_{2req}$) are limited in terms of magnitude to the desired torques ($M_{1des}$, $M_{2des}$).

**7.** Method according to Claim 3, characterized in that one neutral-potential preset value for the axle torque is set corresponding to the desired torque, while the other neutral-potential preset value is formed corresponding to the already defined preset value and the current DC voltages (E1, E2) at the two-point invertors (3 to 8).

**8.** Method according to one of Claims 2 to 7, characterized in that the steady-state real powers of the drives (9, 10) are determined from the desired torques ($M_{1des}$, $M_{2des}$), the rotation speed of the drives and the losses which depend on the required flux values of the drives.

**9.** Method according to Claim 5, characterized in that the additional torque ($\Delta$M) is formed as a function of the rotation speed with P-gain, the P-gain having the value zero in the region between a positive and a negative takeover rotation speed and rising in the form of a ramp as the positive or negative rotation speed rises.

**10.** Method according to Claim 9, characterized in that a brake chopper is used for regulation of the mid-potential at rotation speeds around zero.

**11.** Device for carrying out the method according to one of Claims 1 to 10 and for regulating the mid-potential of a series circuit on the DC-side of two traction two-point invertors for supplying two drives of a bogey of a railway vehicle, characterized in that a characteristic generator (20) is provided which uses the required bogey torque ($\overline{M}_{req}$) to form two desired torques ($M_{1des}$, $M_{2des}$) and desired factors (m1, m2) corresponding to the mechanical axle load and load relief and to the bogey geometry, in that a first computer (21) uses the desired factors, the DC voltages (E1, E2) at the two-point invertors (3 to 8) and the real powers of the drives (9, 10) to form a required mid-potential ($\Delta E_{req}$), in that a second computer (22) uses the desired torques and the DC voltages at the two-point invertors to form neutral-potential preset values ($M_{1preset}$, $M_{2preset}$) for the axle torques, in that a mid-potential regulator (25) forms an additional torque ($\Delta M$) corresponding to the comparison between the required value and the actual value of the mid-potential ($\Delta E_{req}$, $\Delta E$), and in that one neutral-potential preset value has the additional torque applied to it in a positive sense, and the other preset value has the additional torque applied to it in a negative sense.

12. Device according to Claim 11, characterized in that a limiter (26) limits the magnitude of the neutral-potential preset values ($M_{1preset}$, $M_{2preset}$), to which the additional torque ($\Delta M$) is applied, to the desired torques ($M_{1des}$, $M_{2des}$).

13. Device according to Claim 12, characterized in that the limiter (26) limits the neutral-potential preset values ($M_{1preset}$, $M_{2preset}$), to which the additional torque ($\Delta M$) is applied to the desired torques ($M_{1des}$, $M_{2des}$) in the direction of larger magnitudes, in that the difference between the difference between the neutral-potential preset values ($M_{2preset}$ - $M_{1preset}$) and the difference between the desired torques ($M_{2des}$ - $M_{1des}$) always corresponds to the value equivalent to twice the additional torque ($2\Delta M$).

14. Device according to Claim 12 and/or 13, characterized in that the limiter (26) limits the neutral-potential preset values ($M_{1preset}$, $M_{2preset}$), to which the additional torque ($\Delta M$) is applied, to a threshold value ($M_{add\ max}$) when the magnitudes of the desired torques ($M_{1des}$, $M_{2des}$) are less than this threshold value.

**Revendications**

1. Procédé pour réguler le potentiel de milieu d'une connexion en série, côté courant continu, de deux onduleurs-duaux de traction pour alimenter deux moteurs de traction d'un bogie d'un véhicule ferroviaire, caractérisé par le fait que le couple de consigne ($M_{consigne}$) de bogie est divisé en deux couples de consigne ($M_{1consigne}$, $M_{2consigne}$) d'essieu destinés à des régulateurs de couple (27, 28) subordonnés autonomes pour chaque moteur de traction (9, 10), les deux couples de consigne d'essieu étant formés de manière telle que le rapport des tensions continues (E1, E2) des deux onduleurs-duaux (3 à 8) en fonctionnement stationnaire corresponde au rapport des puissance efficaces des moteurs de traction.

2. Procédé selon la revendication 1, caractérisé par le fait que l'on opère la répartition des couples de consigne d'essieu en fonction de la charge et du soulagement mécanique des essieux et en fonction de la géométrie du bogie et que l'on en déduit des couples cibles ($M_{1cible}$, $M_{2cible}$) et des facteurs cibles (m1, m2).

3. Procédé selon la revendication 2, caractérisé par le fait qu'en fonction des couples cibles ($M_{1cible}$, $M_{2cible}$) et des tensions continues (E1, E2) actuelles au niveau des onduleurs-duaux (3 à 8), on forme des valeurs imposées ($M_{1imposé}$, $M_{2imposé}$) actuelles à potentiel neutre pour les couples d'essieu de telle sorte que ces valeurs imposées ($M_{1imposé}$, $M_{2imposé}$) n'entraînent pas de décalage du potentiel de milieu.

4. Procédé selon la revendication 3, caractérisé par le fait que les valeurs imposées ($M_{1imposé}$, $M_{2imposé}$) à potentiel neutre sont combinées à un couple additionnel ($\Delta M$) de sens opposé, de manière telle que le décalage de potentiel de milieu souhaité en fonction de la puissance efficace des moteurs de traction (9, 10) ait lieu, le couple additionnel ($\Delta M$) étant ajouté à l'une des valeurs imposées à potentiel neutre et retranché de l'autre valeur imposée à potentiel neutre.

5. Procédé selon la revendication 4, caractérisé par le fait que le couple additionnel ($\Delta M$) est imposé et régulé en fonction de la valeur effective du potentiel de milieu ($\Delta M$) et de la valeur de consigne ($\Delta E_{consigne}$) du potentiel de milieu établie en fonction des tensions continues (E1, E2) au niveau des onduleurs-duaux et des puissances efficaces des moteurs de traction (9, 10).

6. Procédé selon la revendication 5, caractérisé par le fait que la valeur des couples de consigne ($M_{1consigne}$, $M_{2consigne}$) est limitée à la valeur des couples cibles ($M_{1cible}$, $M_{2cible}$).

7. Procédé selon la revendication 3, caractérisé par le fait l'on sélectionne une valeur imposée à potentiel neutre pour le couple d'essieu en fonction du couple cible tandis que l'on forme l'autre valeur imposée à potentiel neutre en fonction de la valeur imposée déjà déterminée et des tensions (E1, E2) au niveau des onduleurs-duaux (3 à 8).

**8.** Procédé selon l'une des revendications 2 à 7, caractérisé par le fait que l'on détermine les puissances efficaces stationnaires des moteurs de traction (9, 10) à partir des couples cibles ($M_{1cible}$, $M_{2cible}$), de la vitesse de rotation des moteurs de traction et des pertes qui dépendent des flux de consigne des moteurs.

**9.** Procédé selon la revendication 5, caractérisé par le fait que le couple additionnel ($\Delta M$) est déterminé en fonction de la vitesse de rotation avec amplification P, l'amplification P prenant une valeur nulle dans la plage comprise entre une vitesse de prise en charge positive et une vitesse de prise en charge négative et augmentant progressivement lorsque la vitesse de rotation positive ou négative croît.

**10.** Procédé selon la revendication 9, caractérisé par le fait que l'on utilise un hacheur de freinage pour réguler le potentiel de milieu pour des vitesses de rotation proches de zéro.

**11.** Dispositif pour la mise en oeuvre du procédé selon l'une des revendications 1 à 10 et pour réguler le potentiel de milieu d'une connexion en série, côté courant continu, de deux onduleurs-duaux de traction pour alimenter deux moteurs de traction d'un bogie d'un véhicule ferroviaire, caractérisé par le fait qu'il est prévu un dispositif d'indication de courbe caractéristique 30 qui, à partir du couple de consigne ($M_{consigne}$) de bogie définit deux couples cibles ($M_{1cible}$, $M_{2cible}$) et deux facteurs cibles (m1, m2) en fonction de la charge et du soulagement mécanique des essieux et de la géométrie du bogie, par le fait qu'à partir des facteurs cibles, des tensions continues (E1, E2) au niveau des onduleurs-duaux (3 à 8) et des puissances efficaces des moteurs de traction (9, 10) un premier calculateur (21) forme une valeur de consigne ($\Delta E_{consigne}$) de potentiel de milieu , par le fait qu'à partir des couples cibles et des tensions continues au niveau des onduleurs-duaux un deuxième calculateur (22) détermine des valeurs imposées ($M_{1imposé}$, $M_{2imposé}$) à potentiel neutre pour les couples d'essieu, par le fait qu'un régulateur de potentiel de milieu (25) détermine un couple additionnel ($\Delta M$) sur la base d'une comparaison valeur de consigne du potentiel de milieu/valeur effective ($\Delta E_{consigne}$, $\Delta E$) et par le fait que la valeur imposée à potentiel neutre est combinée positivement avec le couple additionnel et l'autre valeur imposée à potentiel neutre est combinée négativement avec le couple additionnel.

**12.** Dispositif selon la revendication 11, caractérisé par le fait qu'un limiteur (26) limite la valeur de la valeur imposée ($M_{1imposé}$, $m_{2imposé}$) à potentiel neutre combinée au couple additionnel ($\Delta M$) à la valeur des couples cibles ($M_{1cible}$, $M_{2cible}$).

**13.** Dispositif selon la revendication 12, caractérisé par le fait qu'un limiteur (26) limite vers le haut à la valeur des couples cibles ($M_{1cible}$, $M_{2cible}$) la valeur imposée ($M_{1imposé}$, $M_{2imposé}$) à potentiel neutre augmentée du couple additionnel ($\Delta M$) de telle sorte que la différence entre la différence des valeurs imposées ($M_{2imposé}$ - $M_{1imposé}$) à potentiel neutre et la différence des couples cibles ($M_{2cible}$ - $M_{1cible}$) corresponde toujours au double du couple additionnel ($2\,\Delta M$).

**14.** Dispositif selon la revendication 12 et/ou 13, caractérisé par le fait que le limiteur (26) limite à une valeur seuil ($M_{add\ max}$) les valeurs imposées ($M_{1imposé}$, $M_{2imposé}$) à potentiel neutre augmentée du couple additionnel ($\Delta M$) lorsque les couples cibles ($M_{1cible}$, $M_{2cible}$) sont inférieurs en valeur à cette valeur seuil.

# Fig.1

Fig.2